# EUROPÄISCHE PATENTSCHRIFT

(11) **EP 3 022 087 B1**
(45) Veröffentlichungstag und Bekanntmachung des Hinweises auf die Patenterteilung: **19.09.2018**
(21) Anmeldenummer: 14741812.3
(22) Anmeldetag: 21.07.2014
(51) Int. Cl.: B60N 3/04

(54) **UNTERKONSTRUKTION FÜR EINE FUSSMATTE**
SUBSTRUCTURE FOR A FLOOR MAT
STRUCTURE PORTEUSE POUR MOQUETTE

(30) Priorität: 19.07.2013 DE 102013012070
(43) Veröffentlichungstag der Anmeldung: 25.05.2016
(73) Patentinhaber: Aunde Kulmbach GmbH, 95326 Kulmbach (DE)
(72) Erfinder: SCHÖTTNER, Markus, 95361 Ködnitz (DE)
(74) Vertreter: DTS Patent- und Rechtsanwälte Schnekenbühl und Partner mbB
(86) Internationale Anmeldenummer: PCT/EP2014/001978
(87) Internationale Veröffentlichungsnummer: WO 2015/007396

(56) Entgegenhaltungen:
- EP-A1- 1 923 503
- DE-A1- 19 812 925
- DE-A1-102009 040 761
- DE-U1- 9 309 926

## Beschreibung

Die Erfindung betrifft eine Unterkonstruktion für eine Fußmatte für ein Kraftfahrzeug mit einer Grundschicht aus einem synthetischen Material und mit einer Polschicht, die über die Grundschicht heraussteht.

Bei der Unterkonstruktion für Fußmatten handelt es sich um ein textiles Flächengebilde, das auf einer Fußmatte durch verschiedene Verfahren aufgebracht werden kann. Bei Fußmatten handelt es sich um Matten, die herausnehmbar in einen Fußraum eines Kraftfahrzeuges gelegt werden. Problematisch hierbei ist, dass solche Fußmatten auf der textilen Unterlage, mit der der Fußraum ausgekleidet ist, nicht verrutschen dürfen. Bislang wurde dies durch unterschiedliche Konstruktionen gelöst.

Beispielsweise gibt es 2-Punkt-Befestigungen mit einem Druckknopf-System. Hierbei müssen Druckknöpfe in der textilen Unterlage im Fußraum, die auch als Autoteppich bezeichnet wird, befestigt werden. Die Installation des Druckknopf-Systems geht einher mit der Beschädigung des Autoteppichs. Darüberhinaus müssen Ersatzbodenmatten immer mit demselben Druckknopf-System versehen sein, das zu demjenigen im Autoteppich passt. Dies führt unter anderem auch zu einem höheren Preis solcher Ersatzbodenmatten.

Eine alternative Lösung des Rutschproblems wurde bislang dadurch erreicht, dass ein oder mehrere Klettstreifen auf der Rückseite der Fußmatten, also der dem Autoteppich zugewandten Seite, aufgebracht wurden. Dies führt zu höheren Konfektionierungskosten, da diese Klettstreifen nach Herstellung der Bodenmatte zusätzlich aufgebracht werden müssen. Darüberhinaus treten auch Ermüdungserscheinungen der Klettstreifen auf, so dass dann ein Verrutschen der Fußmatte erfolgt. Darüberhinaus ist bei solchen Fußmatten auch eine Faltenbildung der Normalfall, da die Klettstreifen nur punktuell aufgebracht sind.

Außerdem wurde in der DE 295 05 095 U1 eine Rutschsicherung für eine Fußmatte für ein Kraftfahrzeug vorgestellt, bei der an der Unterseite einer fertig hergestellten Fußmatte eine Beflockung aufgebracht wird, deren Länge, Durchmesser und Steifigkeit auf den Autoteppich abgestimmt sind. Zwischen der Unterseite der Fußmatte und der Beflockung kann noch zusätzlich eine Trägerschicht vorhanden sein. Auch in diesem Fall ergibt sich eine Erhöhung der Konfektionierungskosten, da ein nachträgliches Aufbringen der Beflockung nötig ist.

Aus der DE 10 2009 040 761 A1 ist eine Unterkonstruktion für eine Fußmatte für ein Kraftfahrzeug bekannt, die eine Grundschicht aus einem synthetischen Material aufweist. Auf diese Grundschicht ist eine Polschicht, die aus Polfäden aus einem synthetischen Material besteht, zum Beispiel eingetuftet worden, so dass diese über diese Grundschicht herausstehen. Aufgabe der Erfindung ist es deshalb, eine alternative Unterkonstruktion für Fußmatten für ein Kraftfahrzeug zur Verfügung zu stellen, bei der keine zusäztlichen Konfektionierungskosten anfallen.

Die Aufgabe wird durch eine Unterkonstruktion für eine Fußmatte für ein Kraftfahrzeug mit den Merkmalen des Patentanspruchs 1 gelöst. Erfindungsgemäß weist die Unterkonstruktion eine Grundschicht aus einem synthetischen Material auf, das gewirkt, gestrickt, geraschelt oder gewebt ist. Unter einer Grundschicht wird im Rahmen dieser Erfindung eine Schicht verstanden, die im Wesentlichen in einer Ebene verläuft, wie sie beispielsweise bei einem Webverfahren durch die Kett- und Schussfäden entsteht. Über diese Grundschicht steht eine Polschicht heraus. Die Polschicht, die auch Florschicht genannt wird, wird schon im Entstehungsprozess der Grundschicht in diese integriert. Beispielsweise wird bei einem Webverfahren zur Herstellung eines Frotteegewebes ein zusätzliches Fadensystem zur Polschlaufenbildung hinzugefügt. Die Polfäden bestehen erfindungsgemäß aus einem synthetischen Material, einer Naturfaser oder einem mineralischen Fasergarn und haben eine Feinheit zwischen 22/1 dtex und 130/1 dtex. Für eine Feinheit von beispielsweise 33/1 dtex bedeutet dies, dass ein einfacher Polfaden mit einer Länge von 10.000 m eine Masse von 33 g hat oder 303 Meter wiegen 1 g.

Eine vorteilhafte Weiterbildung der Erfindung sieht vor, dass die Polschicht aus einem gehärteten monofilen Polfaden gebildet wird. Monofil (auch Monofilament oder Draht) bezeichnet ein Garn aus einem einzigen Filament ("einfädig"); Monofilamentgarne werden durch Extrusionsschmelzspinnverfahren aus Einlochdüsen ersponnen. Um die benötigte Rutschfestigkeit der Polschicht gegenüber dem Autoteppich zu erreichen, sind die Polfäden gehärtet. Eine solche Fußmatte benötigt somit keinen zusätzlichen Konfektionierungsschritt, da die Polschicht schon während des Fertigungsprozesses der Grundschicht eingearbeitet wurde und aufgrund der Härtung der Polfäden die notwendige Rutschfestigkeit erzielt wird.

Eine weitere vorteilhafte Weiterbildung der Erfindung sieht vor, dass die Polhöhe der Polfäden zwischen 1,2 mm und 2,5 mm liegt, bevorzugt zwischen 1,6 mm und 2,0 mm. In diesem Bereich der Polhöhe können die Polfäden mit der erfindungsgemäßen Feinheit, nachdem sie einen auf den vorgesehenen Autoteppich abgestimmten Härtungsprozesses durchlaufen haben, die benötigte Rutschfestigkeit erhalten.

Eine weitere vorteilhafte Weiterbildung der Erfindung sieht vor, dass der Winkel zwischen den Polfäden und der Oberfläche der Grundschicht zwischen 50° und 90°, bevorzugt zwischen 60° und 80°, liegt. In diesem Winkelbereich ist in Verbindung mit den anderen Parametern, wie Feinheit der Polfäden, Polhöhe der Polfäden und Härtungsprozess eine zusätzliche Einstellmöglichkeit der Rutschfestigkeit der Fußmatte gegenüber dem Autoteppich möglich.

Eine weitere vorteilhafte Weiterbildung der Erfindung sieht vor, dass die Polfäden an ihrem grundschichtfernen Ende geschnitten oder abgeschert sind. Dadurch können die erfindungsgemäße Unterkonstruktion auf verschiedenen Standardmaschinen hergestellt werden und durch einen danach durchgeführten Schnitt- bzw. Abschervorgang wird die benötigte Polhöhe erreicht. Besonders vorteilhaft kann dabei eine Herstellung auf einer RR-Raschelmaschine - RR steht für rechts-rechts - erfolgen, wobei bei dieser Herstellungsart zwei Grundschichten entstehen, zwischen denen eine Polschicht ausgebildet ist. Im Anschluss an diese Herstellung wird der entstandene Stoff beispielsweise in der Mitte zwischen den beiden Grundschichten mittels einer geeigneten Maschine, beispielsweise einer Doppelplüsch-Schneidmaschine, durchgeschnitten. Dabei erhält man zwei gleiche Stoffbahnen mit gleichen Polhöhen der Polfäden. Der zusätzliche Schritt zum Schneiden des Stoffes wird dadurch mehr als aufgewogen, dass zwei Stoffbahnen entstehen. Die Herstellung kann auch auf einer Velours-Webmaschine, einer Rundstrickmaschine, einer Flachstrickmaschine, einer Kettstuhlmaschine mit Polplatinen oder einer Frotteewebmaschine erfolgen. Bei diesen Maschinen erfolgt ein Schneiden oder Abscheren der Polfäden mit dafür vorgesehenen und dem Fachmann bekannten Schneide- bzw. Abscherverfahren.

Eine weitere vorteilhafte Weiterbildung der Erfindung sieht vor, dass das synthetische Material der Grundschicht aus einem Filamentgarn besteht, insbesondere aus Polyester, bevorzugt mit einer Feinheit zwischen 76/1 dtex und 167/1 dtex. Wenn darüber hinaus auch die Polschicht aus demselben Material wie die Grundschicht besteht, bevorzugt aus Polyester (sie kann aber beispielweise auch aus Chemiefasern, wie Polyester, Polyamid, Polyacryl, Polypropylen, oder aus Naturfasern oder aus Mineralfasern bestehen), kann die Unterkonstruktion nach dem Ende ihres Gebrauchs einem sortenreinen Recyclingverfahren zugeführt werden. Die Feinheit des Filamentgarns der Grundschicht muss jedoch deutlich höher sein als diejenige der Polfäden, die bevorzugt bei 33/1 dtex liegt, damit die Festigkeit der Grundschicht gewährleistet ist. Das verwendete Filamentgarn kann auch texturiert sein.

Eine alternative Weiterbildung der Erfindung sieht vor, dass das synthetische Material (chemische Faser) der Grundschicht aus einer Mischung von Filamentgarnen und/oder Multifilamentgarnen besteht. Zusätzlich zu den synthetischen Materialien können für die Grundschicht auch noch pflanzliche, tierische und/oder mineralische Fasern für die Filamentgarne und/oder Multifilamentgarne verwendet werden. Damit können viele unterschiedliche, auf den jeweiligen späteren Einsatz der Fußmatte abgestimmte Materialien verwendet werden.

Eine weitere vorteilhafte Weiterbildung der Erfindung sieht vor, dass auf der den Polfäden abgewandten Oberfläche der Grundschicht eine Deckschicht aufgeklebt oder aufkaschiert ist. Dadurch kann die Unterkonstruktion für Fußmatten nicht nur aus Textilmaterial bestehen, sondern zusätzlich eine dem Insassen zugewandte weitere Schicht aufweisen, die man als Funktionsschicht bezeichnen kann. Beispielsweise können dabei Kunststoffschichten verwendet werden, die für den Einsatz im Winter geeignet sind, wenn über die Schuhe des Fahrzeuginsassen Schnee und Split in den Fußraum eingebracht werden.

Eine vorteilhafte Ausgestaltung dieser Deckschicht sieht vor, dass sie eine Polyurethanschaumkaschierung, ein feuerhemmendes Vlies, eine polverfestigende synthetische Beschichtung, eine Folienschicht oder eine weitere Textilschicht ist. Damit kann bei bestimmten Herstellungsverfahren der Unterkonstruktion eine zusätzliche Polverfestigung auf der der Polschicht abgewandten Seite der Grundschicht erreicht werden, bei der ansonsten nur unzureichend in der Grundschicht verankerte Polfäden in dieser Grundschicht sicher festgehalten werden. Andere Deckschichten können zur Feuerhemmung verwendet werden oder zur Realisierung anderer Funktionalitäten.

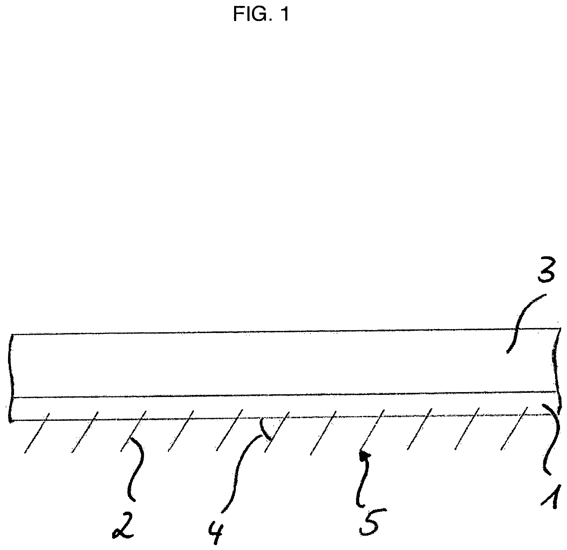

Weitere Vorteile und Einzelheiten der Erfindung werden anhand der Figur im Folgenden beschrieben. Die einzige Figur zeigt:
einen stark vereinfachten systematischen Querschnitt durch eine Fußmatte mit einer erfindungsgemäßen Unterkonstruktion.

Ein Ausführungsbeispiel einer erfindungsgemäßen Unterkonstruktion ist in einem systematischen Querschnitt in der Figur dargestellt. Bei der Darstellung handelt es sich um eine sehr grobe Vereinfachung des Aufbaus der Fußmatte.

Die dargestellte textile Fläche weist eine Grundschicht 1 auf, die als Gewirke ausgebildet ist. Die zur Herstellung verwendeten Filamentgarne bestehen aus Polyester-Filamentgarnen und Multifilament-Garnen, beispielsweise wird als Filamentgarn Polyester mit einer Feinheit von 167/1 dtex verwendet. Bei anderen, nicht dargestellten Ausführungsbeispielen sind auch andere Feinheiten des Multifilaments oder Filamentgarns, beispielsweise von 76/1 dtex, möglich. Anstatt Polyester-Filamentgarne zu verwenden, wie dies im dargestellten Ausführungsbeispiel der Fall ist, kann in anderen Ausführungsbeispielen auch Garn aus anderen Materialien verwendet werden. Die Verwendung von Monofilen oder Filamentgarnen aus nur einem einzigen Material, wie beispielsweise Polyester, ist bei anderen Ausführungsbeispielen ebenfalls nicht zwingend notwendig, so können beispielsweise auch pflanzliche Fasern, tierische Fasern, mineralische Fasern, chemische Multifilamentgarne, gesponnene, texturierte oder verdrillte Garne verwendet werden; genauso gut möglich ist auch eine Mischung der verschiedenen Garne, die nicht zwingend aus dem selben Material bestehen müssen.

Unter der Grundschicht 1, die beispielsweise eine Dicke von 1 mm aufweist, stehen die Polfäden 2 beispielsweise 1,6 mm heraus. Die Polfäden 2 bestehen aus Monofil-Garn. Die Polfäden 2, werden schon während des Entstehungsprozesses der Grundschicht 1 in diese eingearbeitet, wie dies beispielsweise bei einem Raschelgewirke, das in dem dargestellten Ausführungsbeispiel verwendet wird, der Fall ist. Außer der Herstellung eines Raschelgewirkes auf einer RR-Raschelmaschine, wie in der Figur dargestellt, können auch andere Maschinen zur Herstellung anderer Stoffe verwendet werden, beispielsweise Doppelplüschwebmaschinen, Rundstrickmaschinen, Flachstrickmaschinen, Kettstuhlmaschinen mit Polplatinen oder Frotteewebmaschinen. Die dabei entstehenden Stoffe sind ebenfalls erfindungsgemäß und weisen die für die Erfindung charakteristische Grundschicht 1 in Verbindung mit der Polschicht 2 auf. Die Polfäden 2 sind in dem dargestellten Ausführungsbeispiel ebenso wie das Fasergarn der Grundschicht 1 aus Polyester. Allerdings weicht die Feinheit der Polfäden 2 deutlich von den viel gröberen Filamentgarnen für die Grundschicht 1 ab. Im dargestellten Ausführungsbeispiel weisen die Polfäden 2 eine Feinheit von 33/1 dtex auf.

Die Polfäden 2 stehen nicht senkrecht zur Oberfläche 1 der Grundschicht 1, sondern schließen mit dieser einen Winkel 4 ein. Der Winkel 4 im dargestellten Ausführungsbeispiel beträgt 60°. Dieser kann jedoch bei anderen Ausführungsbeispielen auch kleiner oder größer sein. Der verwendete Winkel 4 hängt dabei davon ab, wie lange die Polfäden 2 sind, welche Feinheit sie haben, welche Härte sie aufweisen und mit was für einem Autoteppich sie zusammenwirken sollen. Der Winkel 4 liegt regelmäßig in einem Bereich von 50° bis 90° (senkrechte Ausrichtung zur Oberfläche der Grundschicht 1). Der Winkel 4 entsteht beim Herstellungsverfahren des in der Figur dargestellten Ausführungsbeispiels während eines Schneidvorgangs der Polfäden 2. Da es sich bei dem dargestellten Gegenstand um ein Raschelgewirke handelt, das auf einer RR-Raschelmaschine erstellt wurde, weist dieses Gewirke vor dem Schneidevorgang zwei voneinander beabstandete Grundschichten 1 auf (nicht dargestellt), die über die darin eingearbeiteten Polfäden 2 miteinander verbunden sind. Die Polfäden 2 stehen in diesem Grundzustand des Raschelgewirkes noch in einem rechten Winkel zur Oberfläche 1 der jeweiligen Grundschicht 1, die beispielsweise eine Dicke von jeweils ca. 1,3 mm aufweist. Während der Durchführung des Schneidprozesses, für das dargestellte Produkt auf einer Doppelplüsch-Schneidmaschine, werden die Polfäden aufgrund des Drucks durch ein Schneidmesser der Doppelplüsch-Schneidmaschine, in Abhängigkeit von der Schneidgeschwindigkeit in ihrem Winkel 4 zur Oberfläche 1 der jeweiligen Grundschicht 1 verändert. Bei dem dargestellten erfindungsgemäßen Ausführungsbeispiel werden die Polfäden 2, die beispielsweise eine Länge von 4 mm haben, durch das Messerband der Doppelplüsch-Schneidmaschine in der Mitte geschnitten. Dadurch erhält man zwei gleiche Stoffbahnen für die Unterkonstruktion mit jeweils einer Grundschicht 1 und darüber herausstehenden, gleich langen Polfäden 2. Die Polfäden 2 haben darüberhinaus - mit einem geringen Toleranzbereich - den gleichen Winkel 4 gegenüber der Oberfläche der Grundschicht 1. Dieser Winkel 4 wird auch Laufrichtung genannt.

Erfindungsgemäß ist es nicht zwingend notwendig, dass die Polfäden 2 nach Herstellung des Raschelgewirks gehärtet werden. Allerdings ist es in den Fällen nötig, in denen die Polfäden 2 eine geringe Feinheit haben, beispielsweise diejenige des Ausführungsbeispiels von 33/1 dtex, da sie ansonsten keine ausreichende Stabilität und Haftkraft aufweisen, um die benötigte Rutschsicherheit nach Einlegen der Fußmatte in den Fußbereich mit dem Autoteppich zu gewährleisten. Verwendet man jedoch die Unterkonstruktion mit einer anderen Befestigungsmöglichkeit, wie Beispielsweise mit einer 2-Punkt-Befestigung mit einem Druckknopf-System oder einem anderen System, ist es nicht zwingend notwendig, dass die Polfäden gehärtet werden müssen. In dem dargestellten Ausführungsbeispiel erfolgt der Härtungsprozess der Polfäden 2 in zwei Schritten. Dies ist jedoch nicht zwingend erforderlich, alternativ können auch nur ein Härtungsschritt oder mehrere Härtungsschritte erfolgen; dies hängt davon ab, wie das gesamte Herstellungsverfahren der Unterkonstruktion aussieht - also beispielsweise, ob es sich um eine Herstellung auf einer Frotteewebmaschine oder einer Doppelplüsch-Webmaschine, etc. handelt. Im dargestellten Ausführungsbeispiel wird das von der RR-Raschelmaschine erstellte Raschelgewirke noch vor dem Schneiden mit der Doppelplüsch-Schneidmaschine einem ersten Härtungsprozess unterzogen. Die Doppelware (ungeschnittene Ware) wird auf eine bestimmte Breite ausgespannt und durch eine dem Grunde nach dem Fachmann bekannte Wärmebehandlung fixiert (Ober- und Unterhitze in Abhängigkeit von der gewünschten Härte der Polfäden 2). Danach wird der Schneideprozess, wie oben beschrieben durchgeführt und dabei die Geschwindigkeit des Messerbandes so eingestellt, dass nach dem gerade beschriebenen ersten Härtungsprozess der oben beschriebene Winkel 4 von 60° gegenüber der Oberfläche der Grundschicht 1 nach Durchführung des Schneideverfahrens erreicht wird. Nachdem das ursprünglich zweilagige Raschelgewirk mittels des Schneideprozesses getrennt wurde, werden die dadurch erhaltenen zwei Stoffbahnen einem zweiten Härtungsprozess unterzogen. Dieser läuft prinzipiell gleich ab wie der erste Härtungsprozess. Die geschnittene Ware wird wieder auf eine bestimmte Breite ausgespannt und mit einer höheren Temperatur als beim ersten Fixieren gehärtet.

Nach dem Durchlaufen des zweiten Härtungsprozesses sind somit die beiden nach dem Schneideprozess erhaltenen Stoffbahnen so ausgebildet, dass die Polfäden 2 die gewünschte Härte aufweisen und die Fußmatte aufgrund der Länge der Polfäden 2 - das Lot vom grundschichtfernen Ende 5 der Polfäden 2 auf die Oberfläche der Grundschicht 1 - im Zusammenspiel mit dem Autoteppich, auf den die Fußmatte im Fußraum im Benutzungsfall gelegt wird, die vorher festgelegte Rutschsicherheit aufweist.

Die im Ausführungsbeispiel dargestellte Unterkonstruktion weist oberhalb der Grundschicht 1 eine Deckschicht 3 auf. Diese Deckschicht 3 kann prinzipiell dazu verwendet werden, um die Verankerung der Polfäden 2 innerhalb der Grundschicht 1 zu verstärken, wie dies beispielsweise bei einer polverfestigenden synthetischen Beschichtung der Fall ist. Im dargestellten Fall handelt es sich jedoch um ein feuerhemmendes Vlies, das den Vorteil für die fertige Fußmatte im eingelegten Zustand hat, dass der Brandschutz erhöht wird. Prinzipiell können neben der dargestellten Deckschicht 3 auch noch weitere oder alternative Deckschichten 3 auf der der Polschicht abgewandten Oberfläche der Grundschicht 1 aufgeklebt oder aufkaschiert werden. Dies hängt nur davon ab, welche Eigenschaften die fertige Fußmatte aufweisen soll, also in erster Linie von deren Einsatzzweck.

### Bezugszeichenliste

- 1: Grundschicht
- 2: Polfaden
- 3: Deckschicht
- 4: Winkel
- 5: Ende des Polfadens

## Patentansprüche

1. Unterkonstruktion für eine Fußmatte für ein Kraftfahrzeug mit einer Grundschicht (1) aus einem synthetischen Material, das gewirkt, gestrickt, geraschelt oder gewebt ist, und mit einer Polschicht, deren Polfäden (2) aus einem synthetischen Material, einer Naturfaser oder einem mineralischen Fasergarn bestehen, die über die Grundschicht (1) heraussteht und in diese während des Fertigungsprozesses der Grundschicht (1) eingearbeitet wurde, wobei die Polfäden (2) eine Feinheit zwischen 22/1 dtex und 130/1 dtex aufweisen.

2. Unterkonstruktion nach Patentanspruch 1, wobei die Polschicht aus Polfäden (2) aus einem gehärteten Monofil besteht.

3. Unterkonstruktion nach einem der vorstehenden Patentansprüche, wobei die Polhöhe der Polfäden (2) zwischen 1,2 mm und 2,5 mm liegt, bevorzugt zwischen 1,6 mm und 2,0 mm.

4. Unterkonstruktion nach einem der vorstehenden Patentansprüche, wobei der Winkel (4) zwischen den Polfäden (2) und der Oberfläche (1) der Grundschicht (1) zwischen 50° und 90°, bevorzugt zwischen 60° und 80°, liegt.

5. Unterkonstruktion nach einem der vorstehenden Patentansprüche, wobei die Polfäden (2) an ihrem grundschichtfernen Ende (5) geschnitten oder abgeschert sind.

6. Unterkonstruktion nach einem der vorstehenden Patentansprüche, wobei das synthetische Material der Grundschicht (1) aus Filamentgarn besteht, insbesondere aus Polyester, bevorzugt mit einer Feinheit zwischen 76/1 dtex und 167/1 dtex.

7. Unterkonstruktion nach einem der Patentansprüche 1 bis 4, wobei das synthetische Material der Grundschicht (1) aus einer Mischung von Filamentgarnen und Multifilamentgarnen besteht.

8. Unterkonstruktion nach Patentanspruch 6, wobei die Grundschicht (1) zusätzlich zum synthetischen Material noch pflanzliche, tierische und/oder mineralische Fasergarne enthält.

9. Unterkonstruktion nach einem der vorstehenden Patentansprüche, wobei auf der den Polfäden (2) abgewandten Oberfläche der Grundschicht (1) eine Deckschicht (3) aufgeklebt oder aufkaschiert ist.

10. Unterkonstruktion nach Patentanspruch 8, wobei die Deckschicht (3) eine Polyurethanschaumkaschierung, ein feuerhemmendes Vlies, eine polverfestigende synthetische Beschichtung, eine Folienschicht oder eine weitere Textilschicht ist.

11. Unterkonstruktion nach einem der vorstehenden Patentansprüche, wobei die Polfäden (2) eine Feinheit von 33/1 dtex aufweisen.

12. Unterkonstruktion nach einem der vorstehenden Patentansprüche, wobei die Polfäden (2) aus Chemiefasern, wie beispielsweise Polyester, Polyamid, Polyacryl, Polypropylen, aus Naturfasern oder aus einer Mineralfaser bestehen.

## Claims

1. Substructure for a floor mat for a motor vehicle with a base layer (1) made of a synthetic material which is warp-knitted, weft-knitted, Raschel-knitted or woven, and with a pile layer the pile threads (2) of which consist of a synthetic material, a natural fibre or a mineral spun yarn, which protrudes over the base layer (1) and was incorporated into same during the production process of the base layer (1), wherein the pile threads (2) have a yarn count of between 22/1 dtex and 130/1 dtex.

2. Substructure according to claim 1, wherein the pile layer consists of pile threads (2) made of a hardened monofilament.

3. Substructure according to one of the preceding claims, wherein the pile height of the pile threads (2) is between 1.2 mm and 2.5 mm, preferably between 1.6 mm and 2.0 mm.

4. Substructure according to one of the preceding claims, wherein the angle (4) between the pile threads (2) and the surface (1) of the base layer (1) is between 50° and 90°, preferably between 60° and 80°.

5. Substructure according to one of the preceding claims, wherein the pile threads (2) are cut or sheared off at their end (5) remote from the base layer.

6. Substructure according to one of the preceding claims, wherein the synthetic material of the base layer (1) consists of filament yarn, in particular made of polyester, preferably with a yarn count of between 76/1 dtex and 167/1 dtex.

7. Substructure according to one of claims 1 to 4, wherein the synthetic material of the base layer (1) consists of a mixture of filament yarns and multifilament yarns.

8. Substructure according to claim 6, wherein the base layer (1) also contains plant, animal and/or mineral spun yarns in addition to the synthetic material.

9. Substructure according to one of the preceding claims, wherein a cover layer (3) is glued or laminated on the surface of the base layer (1) facing away from the pile threads (2).

10. Substructure according to claim 8, wherein the cover layer (3) is a polyurethane foam lining, a fire-retardant nonwoven fabric, a pile-strengthening synthetic coating, a film layer or a further textile layer.

11. Substructure according to one of the preceding claims, wherein the pile threads (2) have a yarn count of 33/1 dtex.

12. Substructure according to one of the preceding claims, wherein the pile threads (2) consist of manmade fibres such as for example polyester, polyamide, polyacrylic, polypropylene, of natural fibres or of a mineral fibre.

## Revendications

1. Structure porteuse pour un tapis de sol pour un véhicule automobile avec une couche de base (1) composée d'une matière synthétique tricotée, brochée, maillée ou tissée et avec une couche de poils dont les fils poils (2) se composent d'une matière synthétique, d'une fibre naturelle ou d'un fil de fibre minérale ressortant de la couche de base (1) et incorporée dans celle-ci pendant le processus de fabrication de la couche de base (1), les fils poils (2) présentant une finesse comprise entre 22/1 dtex et 130/1 dtex.

2. Structure porteuse selon la revendication 1, la couche de poils se composant de fils poils (2) fabriqués à partir d'un monofil durci.

3. Structure porteuse selon l'une quelconque des revendications précédentes, la hauteur de poil des fils poils (2) étant comprise entre 1,2 mm et 2,5 mm, de façon préférée entre 1,6 mm et 2,0 mm.

4. Structure porteuse selon l'une quelconque des revendications précédentes, l'angle (4) entre les fils poils (2) et la surface (1) de la couche de base (1) étant compris entre 50° et 90°, de façon préférée entre 60° et 80°.

5. Structure porteuse selon l'une quelconque des revendications précédentes, les fils poils (2) étant coupés ou sectionnés au niveau de leur extrémité (5) la plus éloignée de la couche de base.

6. Structure porteuse selon l'une quelconque des revendications précédentes, la matière synthétique de la couche de base (1) se composant de fils entremêlés, notamment en polyester, de façon préférée d'une finesse comprise entre 76/1 dtex et 167/1 dtex.

7. Structure porteuse selon l'une quelconque des revendications 1 à 4, la matière synthétique de la couche de base (1) se composant d'un mélange de fils entremêlés et de fils à multifilaments.

8. Structure porteuse selon la revendication 6, la couche de base (1) contenant encore, en sus de la matière synthétique, des fils de fibres végétales, animales et/ou minérales.

9. Structure porteuse selon l'une quelconque des revendications précédentes, une couche de recouvrement (3) étant collée ou plaquée sur la surface de la couche de base (1) opposée aux fils poils (2).

10. Structure porteuse selon la revendication 8, la couche de recouvrement (3) étant un placage de mousse de polyuréthane, un non-tissé ignifuge, un revêtement synthétique fixant les poils, une couche pelliculée ou toute autre couche textile.

11. Structure porteuse selon l'une quelconque des revendications précédentes, les fils poils (2) présentant une finesse de 33/1 dtex.

12. Structure porteuse selon l'une quelconque des revendications précédentes, les fils poils (2) se composant de fibres chimiques, par exemple de polyester, de polyamide, de polyacrylique, de polypropylène, de fibres naturelles ou d'une fibre minérale.
